# FASCICULE DE BREVET EUROPEEN

(11) **EP 1 791 707 B1**
(45) Date de publication et mention de la délivrance du brevet: **17.02.2010**
(21) Numéro de dépôt: 05799848.6
(22) Date de dépôt: 12.09.2005
(51) Int. Cl.: B60J 3/00

(54) **PARE SOLEIL POUR VEHICULE AUTOMOBILE**
SONNENBLENDE FÜR EIN MOTORFAHRZEUG
SUN-VISOR FOR A MOTOR VEHICLE

(30) Priorité: 13.09.2004 FR 0452029
(43) Date de publication de la demande: 06.06.2007
(73) Titulaire: RENAULT TRUCKS, 69800 St Priest (FR)
(72) Inventeur: DROUARD, Julien, 91570 Bièvres (FR)
(74) Mandataire: Putet, Gilles
(86) Numéro de dépôt international: PCT/FR2005/050730
(87) Numéro de publication internationale: WO 2006/030153

(56) Documents cités:
- DE-A1- 3 941 512
- FR-A- 2 737 988
- GB-A- 692 672
- US-A- 2 570 399
- US-A- 2 621 071
- US-A- 2 854 282

## Description

L'invention concerne un pare-soleil pour véhicule automobile. Dans la suite de la description, l'invention est plus particulièrement décrite en relation avec les cabines de camions, sans toutefois qu'elle soit limitée à ce domaine d'application.

De nombreux dispositifs ont déjà été proposés pour protéger les chauffeurs de camions de l'éblouissement dû aux rayons du soleil. Parmi ceux-ci, le plus élémentaire reste la bande autocollante positionnée au sommet du pare-brise. Cependant, l'ombre générée par ce type de système est particulièrement réduite.

On connaît également les dispositifs se présentant sous la forme de coque en plastique translucide rapportée sur la carrosserie et positionnée au sommet du pare-brise. Là encore, la surface d'ombre générée est relativement faible sans compter la dégradation du plastique translucide utilisé sous l'effet du rayonnement UV.

On a décrit dans les documents US 2 570 399 et US 2 854 282 des systèmes de pare-soleil dérivés de ces coques jouant le rôle de visière. Ces systèmes sont disposés sur le toit de la cabine d'un véhicule, et comportent une visière rétractable. Plus précisément, ces systèmes comportent un logement prévu sur le somment du toit de la cabine, à l'intérieur duquel peut coulisser une visière. Cette visière peut être plus ou moins sortie de son logement en fonction de la position du soleil. On conçoit que ces systèmes ne sont pas adaptés pour être installés sur des véhicules roulant à vitesse élevée, car l'air s'écoulant sur le pare-brise vient exercer sous la visière une pression importante, avec donc des risques d'arrachement de la visière.

Des systèmes plus efficaces mais plus onéreux sont, par exemple, ceux décrit dans le document FR-A-2737988. Ces dispositifs se présentent sous la forme de rideaux escamotables, qui s'enroulent dans des caissons prévus à cet effet, positionnés au niveau du plafond de la cabine. Outre l'encombrement occasionné, la présence du rideau n'empêche pas le rayonnement UV sur le pare-brise et par conséquent l'échauffement de la cabine.

En d'autres termes, le problème que se propose de résoudre l'invention est de rechercher un nouveau système de pare-soleil peu encombrant, générant une surface d'ombre importante sur le pare-brise et diminuant par la même, l'échauffement de la cabine.

Le Demandeur a eu l'idée d'intégrer le pare-soleil directement dans la carrosserie de la cabine en particulier sous forme d'un bandeau horizontal réglable en profondeur.

Dès lors, l'invention a pour objet un véhicule automobile dont la cabine comprend une carrosserie intégrant un pare-brise avant apte à générer une ombre portée sur ledit pare-brise, ce dispositif étant réglable en profondeur par rapport au plan du pare-brise. Ainsi, ce dispositif est apte à générer une ombre portée sur le pare-brise au niveau du visage du conducteur.

Conformément à l'invention, le dispositif se présente sous la forme d'un bandeau horizontal intégré dans la carrosserie, ledit bandeau étant positionné au sommet du pare-brise.

En d'autres termes, le système proposé permet grâce à son réglage en profondeur de garder constante une zone d'ombre et ce malgré le mouvement du camion. Comme le bandeau est intégré dans la carrosserie, il n'a pas d'influence sur les propriétés aérodynamiques du véhicule lorsqu'il est inactif, c'est-à-dire lorsqu'il est en place dans son logement qui est affleurant par rapport au reste de la carrosserie.

Dans un premier mode de réalisation, le bandeau s'étend sur tout ou partie, avantageusement la totalité de la longueur du pare-brise et se présente en une seule pièce.

Pour permettre un réglage individuel de la part du passager et du conducteur, le bandeau peut-être séparé en plusieurs parties, et notamment séparé en deux verticalement en son milieu.

Le réglage en profondeur s'entend d'un réglage en translation qui peut ou non s'accompagner d'un réglage en rotation. Ce réglage est obtenu grâce à la mise en oeuvre de moyens de guidage solidaires à la fois de la carrosserie et du bandeau. De tels moyens sont connus de l'homme du métier.

Lors du déplacement en translation du bandeau, un espace libre est généré entre le bandeau et la carrosserie. Cet espace libre laisse passer à l'air s'écoulant sur le pare-brise en générant de minimes perturbations aérodynamiques, en comparaison avec les solutions décrites dans les documents US 2 570 399 et US 2 854 282.

En pratique, les moyens de guidage du bandeau par rapport au plan du pare-brise sont commandés hydrauliquement, pneumatiquement ou électriquement.

L'invention et les avantages qui en découlent ressortiront mieux de l'exemple de réalisation suivant à l'appui des figures annexées.
La figure 1 est une représentation de la face avant d'une cabine de camion muni d'un pare-soleil conforme à l'invention en position inactive.
La figure 2 représente une cabine de camion munie d'un pare-soleil, conforme à l'invention, en position opérationnelle.

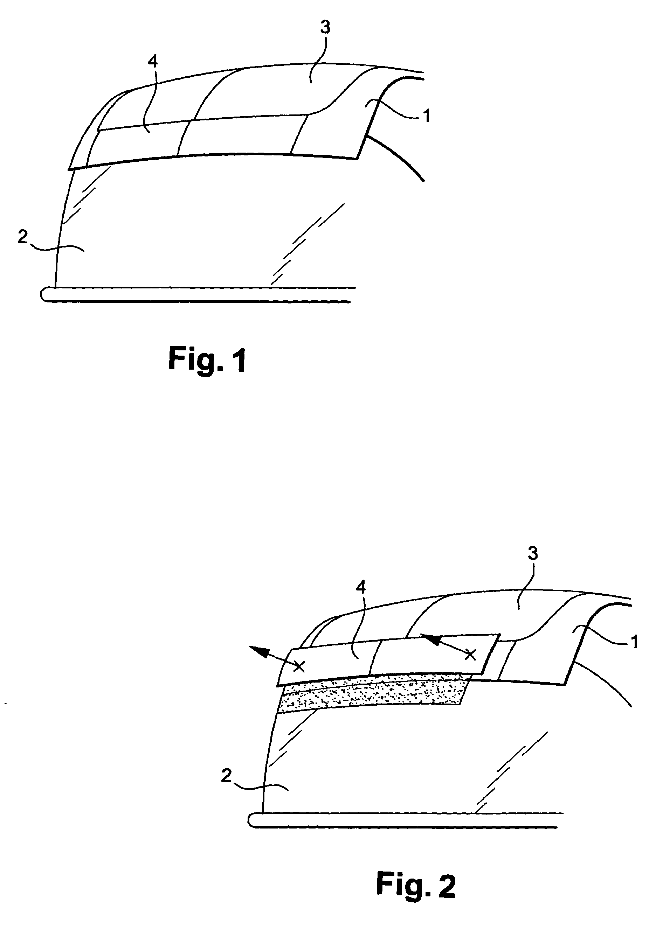

La cabine de camion représentée partiellement sur la figure 1 est une cabine classique équipée essentiellement d'un élément de carrosserie 1, d'un pare-brise avant 2 et de façon optionnelle d'un toit panoramique 3.

Selon l'invention, cette cabine est munie d'un pare-soleil 4 faisant parte intégrante de la carrosserie. Plus exactement, le pare-soleil se présente sous forme d'un bandeau horizontal positionné au sommet du pare-brise 2 et intégré dans l'élément de carrosserie 1. Ce pare-soleil peut se présenter en deux parties en fonction du réglage souhaité par le chauffeur et/ou le passager.

Sur la figure 2, on a représenté le pare-soleil en position dépliée, c'est à dire à distance de l'élément de carrosserie 1. Le déploiement du pare-soleil peut être effectué par tout moyen mécanique connu tel que commande hydraulique, électrique ou pneumatique. Le réglage est un réglage en profondeur obtenu grâce à la présence de moyens de guidage tels que rails ou de tiges, solidaires de la carrosserie et du bandeau.

Sur la figure 2, on constate que le pare-soleil est animé d'un mouvement de translation dans la mesure où il reste dans le même plan que l'élément de carrosserie 1. Bien entendu, pour orienter l'ombre portée sur le pare brise en fonction du rayonnement, il est possible pour le conducteur, de faire pivoter plus ou moins le pare-soleil selon un axe horizontal.

L'invention et les avantages qui en découlent, ressortent bien de la description qui précède. On note notamment l'absence d'encombrement du pare-soleil et son efficacité dans la mesure où sa faible surface génère une ombre portée importante. Le coefficient de pénétration dans l'air (Cx) selon l'axe défini par l'avance du véhicule est amélioré en cas de non-utilisation. Il n'est pratiquement pas modifié lorsque le pare-soleil est actif.

## Revendications

1. Véhicule automobile dont la cabine comprend une carrosserie (1) et un pare-brise (2), intégrant un dispositif (4) apte à générer une ombre portée sur ledit pare-brise (2), ledit dispositif (4) étant réglable en profondeur par rapport au plan du pare-brise (2), **caractérisé en ce que** le dispositif (4) se présente sous la forme d'un bandeau horizontal intégré dans la carrosserie (1), ledit bandeau étant positionné au sommet du pare brise (2).

2. Véhicule selon la revendication 1, **caractérisé en ce que** le dispositif (4) est apte à générer une ombre portée sur le pare brise au niveau du visage du conducteur.

3. Véhicule selon la revendication 1, **caractérisé en ce que** le bandeau s'étend sur tout ou partie de la longueur du pare brise et est réalisé en une seule pièce.

4. Véhicule selon la revendication 1, **caractérisé en ce que** le bandeau se présente en deux parties, respectivement une partie droite, et une partie gauche positionnée respectivement en regard du poste du passager et en regard du poste chauffeur.

5. Véhicule selon l'une des revendications précédentes, **caractérisé en ce que** le dispositif est équipé de moyens de guidage par rapport à la carrosserie.

6. Véhicule selon la revendication 5, **caractérisé en ce que** les moyens de guidage permettent au dispositif d'effectuer un mouvement de translation par rapport au plan du pare-brise.

7. Véhicule selon la revendication 5, **caractérisé en ce que** les moyens de guidage permettent au dispositif d'effectuer un mouvement de pivotement horizontal par rapport au plan du pare-brise.

8. Véhicule selon la revendication 5, **caractérisé en ce que** les moyens de guidage permettent au dispositif d'effectuer un mouvement de translation et de pivotement horizontal par rapport au plan du pare-brise.

9. Véhicule selon la revendication 5, **caractérisé en ce que** les moyens de guidage sont commandés de manière hydraulique, pneumatique ou électrique.

## Claims

1. Motor vehicle the cab or cabin of which comprises bodywork (1) and a windscreen (2) incorporating a device (4) able to generate a shadow cast on the said windscreen (2), the said device (4) being depth-adjustable with respect to the plane of the windscreen (2), **characterized in that** the device (4) is in the form of a horizontal strip incorporated into the bodywork (1), the said strip being positioned at the top of the windscreen (2).

2. Vehicle according to Claim 1, **characterized in that** the device (4) is able to generate a shadow cast on the windscreen level with the driver's face.

3. Vehicle according to Claim 1, **characterized in that** the strip extends over all or part of the length of the windscreen and is made in a single piece.

4. Vehicle according to Claim 1, **characterized in that** the strip is in two parts, respectively a right-hand part and a left-hand part positioned one opposite the passenger seat and one opposite the driving seat.

5. Vehicle according to one of the preceding claims, **characterized in that** the device is equipped with means of guiding it relative to the bodywork.

6. Vehicle according to Claim 5, **characterized in that** the guide means allow the device to effect a translational movement with respect to the plane of the windscreen.

7. Vehicle according to Claim 5, **characterized in that** the guide means allow the device to effect a horizontal pivoting movement with respect to the plane of the windscreen.

8. Vehicle according to Claim 5, **characterized in that** the guide means allow the device to effect a movement of translation and of horizontal pivoting with respect to the plane of the windscreen.

9. Vehicle according to Claim 5, **characterized in that** the guide means are hydraulically, pneumatically or electrically operated.

## Patentansprüche

1. Kraftfahrzeug, dessen Kabine eine Karosserie (1) und eine Windschutzscheibe (2) umfasst, einschließlich einer Vorrichtung (4), die dazu geeignet ist, einen Schlagschatten auf der Windschutzscheibe (2) zu erzeugen, wobei die Vorrichtung (4) bezogen auf die Ebene der Windschutzscheibe (2) tiefenverstellbar ist, **dadurch gekennzeichnet, dass** die Vorrichtung (4) in Form einer horizontalen Blende vorliegt, die in die Karosserie (1) integriert ist, wobei die Blende an der höchsten Stelle der Windschutzscheibe (2) positioniert ist.

2. Fahrzeug nach Anspruch 1, **dadurch gekennzeichnet, dass** die Vorrichtung (4) dazu geeignet ist, im Bereich des Gesichts des Fahrers einen Schlagschatten auf der Windschutzscheibe zu erzeugen.

3. Fahrzeug nach Anspruch 1, **dadurch gekennzeichnet, dass** sich die Blende über die Gesamtheit oder einen Teil der Länge der Windschutzscheibe erstreckt und in einem Stück ausgeführt ist.

4. Fahrzeug nach Anspruch 1, **dadurch gekennzeichnet, dass** die Blende in zwei Teilen vorliegt, einem rechten bzw. einem linken Teil, die jeweils gegenüber dem Beifahrersitz bzw. gegenüber dem Fahrersitz positioniert sind.

5. Fahrzeug nach einem der vorhergehenden Ansprüche, **dadurch gekennzeichnet, dass** die Vorrichtung mit Führungseinrichtungen bezüglich der Karosserie ausgestattet ist.

6. Fahrzeug nach Anspruch 5, **dadurch gekennzeichnet, dass** die Führungseinrichtungen es der Vorrichtung erlauben, eine Translationsbewegung bezüglich der Windschutzscheibenebene auszuführen.

7. Fahrzeug nach Anspruch 5, **dadurch gekennzeichnet, dass** die Führungseinrichtungen es der Vorrichtung erlauben, eine horizontale Schwenkbewegung bezüglich der Windschutzscheibenebene auszuführen.

8. Fahrzeug nach Anspruch 5, **dadurch gekennzeichnet, dass** die Führungseinrichtungen es der Vorrichtung erlauben, eine Translationsbewegung und eine horizontale Schwenkbewegung bezüglich der Windschutzscheibenebene auszuführen.

9. Fahrzeug nach Anspruch 5, **dadurch gekennzeichnet, dass** die Führungseinrichtungen auf hydraulische, pneumatische oder elektrische Weise gesteuert werden.
